Europäisches Patentamt

European Patent Office

Office européen des brevets

(11) Publication number: **0 516 209 A1**

## EUROPEAN PATENT APPLICATION

(21) Application number: **92201335.4**

(22) Date of filing: **08.05.92**

(51) Int. Cl.⁵: **F16C 33/80**

(30) Priority: **28.05.91 NL 9100919**

(43) Date of publication of application:
**02.12.92 Bulletin 92/49**

(84) Designated Contracting States:
**DE FR GB IT NL SE**

(71) Applicant: **SKF Industrial Trading & Development Co, B.V.**
**Kelvinbaan 16**
**NL-3439 MT Nieuwegein(NL)**

(72) Inventor: **Van Brakel, Ronald Johannes**
**Kardinaal Alfrinklaan 43**
**NL-3972 SG Driebergen-Rijsenburg(NL)**
Inventor: **Dolfsma, Hendrik**
**Strijpweg 6**
**NL-3999 NW Tull en 'T Waal(NL)**

(74) Representative: **de Bruijn, Leendert C. et al**
**Nederlandsch Octrooibureau**
**Scheveningseweg 82 P.O. Box 29720**
**NL-2502 LS Den Haag(NL)**

(54) **Rolling element bearing.**

(57) A rolling element bearing includes an inner race (2) and an outer race (1) and at least one row of rolling elements (3) located between these races, and a pair of sealing rings (5) mounted on either side of the rolling elements, whereby each ring (5) is attached at one of its circumferential edges to the race (1) located opposite it, while the other circumferential edge is located at a distance from the other race (2) so that an annular gap (9) exists between this edge and this race. The aforementioned other circumferential edge of the sealing ring, which is located at a distance from the race (2) located opposite it, is formed by the part (7) of the ring (5) - adjacent to this edge - which is bent inward over an angle of about 90°, whereby the end (8) of this part (7) is bent inward again, at an angle of about 90°.

The convention concerns a rolling element bearing, including an inner race and an outer race and at least one row of rolling elements located between these races, and a pair of sealing rings mounted on either side of the rolling elements, whereby each ring is attached at one of its circumferential edges to the race located opposite it, while the other circumferential edge is located at a distance from the other race so that an annular gap exists between this edge and this race. A similar rolling element bearing is known from the European Patent No. 0129270.

In general, a rolling element bearing which is lubricated with oil may never be deprived of lubrication when it is in operation, not even during a relatively short time because this would greatly shorten the service life of the bearing or could cause sudden failure which might lead to accidents. This applies in particular to bearings operating at high speeds.

The patent referred to above offers a solution to this problem, which consists of an annular elastic seal which is attached to the sealing ring, whose inside circumferential part projects radially inward through the aforementioned gap and rests against the inner race, creating a seal for the bearing which is essentially free of leaks.

However, this solution has the disadvantage that a relatively high friction resistance between the inner race and the elastic element resting against it is generated, in particular at high speeds, which affects the performance of the bearing.

The objective of the invention is to create a rolling element bearing of the type mentioned, which does not have this disadvantage and which, in addition, is particularly suitable for use in the gear box of a helicopter.

The objective is achieved in that in the rolling element bearing according to the invention, the aforementioned other circumferential edge of the sealing ring, which is located at a distance from the race located opposite it, is formed by the part of the ring - adjacent to this edge - which is bent inward over an angle of about 90°, whereby the end of this part is bent inward again, at an angle of about 90°.

In a bearing seal executed in this manner, the aforementioned annular gap remains open so that normally, at all times, lubrication oil can flow into the bearing from the outside, for example from a gear box, while the turned edge of the sealing ring forms a reservoir in which sufficient oil is available for the lubrication of the bearing, should the bearing ever be in a situation in which the supply of oil through the annular gap is interrupted. The latter situation may occur when the gear box in which the bearing is contained is subjected to a relatively large angle displacement vis-a-vis the normal setting, something which may be the case in particular with helicopters.

The aforementioned first circumferential edge of the sealing ring - where the ring is attached to the race located opposite it - is preferably formed by the part of the ring adjacent to this edge, which is bent inward over an angle of 90°, so that the sealing ring is U-shaped in cross-section, which facilitates the attachment of the sealing ring.

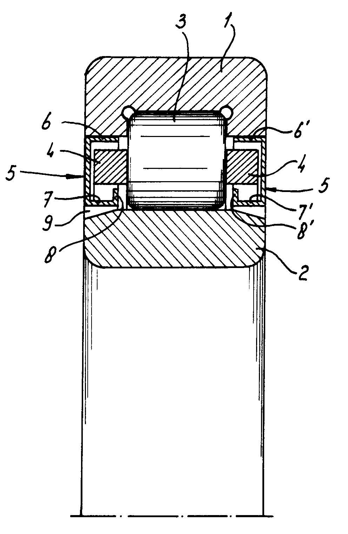

The invention is explained further with reference to the drawing which shows an embodiment of a rolling element bearing according to the invention which sits, at least in part, in an oil bath.

As shown in the drawing, the rolling element bearing includes an outer race 1, an inner race 2 and a row of rollers 3 located in between, while reference number 4 indicates a cage separating the rollers 3 form one another.

On either side of the rollers 3, sealing rings 5 and 5' have been mounted which are identical so that only sealing ring 5 will be described further, and corresponding parts of the sealing ring 5' bear the same reference numbers but with the addition of a + sign. The sealing ring 5 has a part 6 turned inward over an angle of 90° which with the ring 5 is attached to the inner race 1. At its inner circumference the ring 5 has also a part 7 turned inward over an angle of 90°, of which the end 8 is again bent inward over an angle of about 90° to form a kind of channel. The inside circumferential edge 7 is at a distance from the inner race 2 located opposite it, so that an open annular gap 9 is formed through which oil can flow into the bearing.

## Claims

1. Rolling element bearing, including an inner race and an outer race and at least one row of rolling elements located between these races, and a pair of sealing rings mounted on either side of the rolling elements, whereby each ring is attached at one of its circumferential edges to the race located opposite it, while the other circumferential edge is located at a distance from the other race so that an annular gap exists between this edge and this race, characterized in that the aforementioned other circumferential edge of the sealing ring (5), which is located at a distance from the race located opposite it, is formed by the part of the ring (7) - adjacent to this edge - which is bent inward over an angle of about 90°, whereby the end (8) of this part (7) is bent inward again, at an angle of about 90°.

2. Rolling element bearing according to claim 1, characterized in that the aforementioned first circumferential edge of the sealing ring (5) - where the ring is attached to the race located opposite it - is formed by the part (6) of the ring adjacent to this edge, which is bent inward over an angle of 90°, so that the ring is U-shaped in cross-section.

3. Sealing ring for use in a rolling element bearing according to claims 1 or 2, characterized in that one of the circumferential edge part (7) of the ring (5) is turned over at an angle of about 90°, while the end (8) of this turned over part (7) is bent inward over an angle of about 90°.

4. Sealing ring according to claim 3, characterized in that the other circumferential edge part (6) of the ring is turned over at an angle of 90° in the same direction as the first-mentioned edge part.

EP 0 516 209 A1

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2 779 640 (JONES)<br>* column 2, line 28 - line 50; figure 1 *<br>--- | 1-4 | F16C33/80 |
| X | US-A-3 083 972 (HUDDLE)<br>* the whole document *<br>--- | 1-4 | |
| A | FR-A-2 218 513 (POHLIG-HECKEL)<br>* the whole document *<br>--- | 1-4 | |
| A | DE-C-927 842 (MAYBACH-MOTOREN)<br>* the whole document *<br><br>----- | 1,3 | |
| | | | TECHNICAL FIELDS SEARCHED (Int. Cl.5 )<br><br>F16C<br>F16J |

The present search report has been drawn up for all claims

| Place of search | Date of completion of the search | Examiner |
|---|---|---|
| THE HAGUE | 04 SEPTEMBER 1992 | ORTHLIEB C.H.E. |